# DEMANDE DE BREVET EUROPEEN

(11) **EP 4 360 926 A1**
(43) Date de publication de la demande: **01.05.2024**
(21) Numéro de dépôt: 23205370.2
(22) Date de dépôt: 23.10.2023
(51) Int. Cl.: B60J 5/04

(54) **DISPOSITIF D'ACCÈS COMPRENANT UNE PORTE EN ÉLYTRE**

(30) Priorité: 31.10.2022 FR 2211344
(71) Demandeur: Renault s.a.s, 92100 Boulogne Billancourt (FR)
(72) Inventeur: MOINE-PICARD, Thierry, 78280 guyancourt (FR)

(57) **Abrégé**

Dispositif d'accès (2) pour un véhicule (1) automobile, comprenant une porte (3), un cadre de porte (4) délimitant une ouverture d'accès (5), la porte étant mobile relativement au cadre de porte entre une position ouverte et une position fermée, la porte étant liée au cadre de porte par un moyen d'articulation (8) en rotation autour d'un axe transversal (Y1), sensiblement perpendiculaire à l'ouverture d'accès, caractérisé en ce qu'il comprend un moyen de butée (10) distinct du moyen d'articulation, le moyen de butée comprenant une première surface de butée (11) solidaire de la porte et une deuxième surface de butée (12) solidaire du cadre de porte, la deuxième surface de butée étant destinée à coopérer avec la première surface de butée pour définir la position ouverte de la porte.

## Description

### Domaine Technique de l'invention

L'invention concerne un dispositif d'accès pour un véhicule automobile, le dispositif d'accès comprenant une porte dite « en élytre ». L'invention porte aussi sur un véhicule automobile comprenant un tel dispositif d'accès.

### Etat de la technique antérieure

Pour accéder à l'habitacle d'un véhicule automobile, la plupart des véhicules automobiles comprennent une porte mobile autour d'un axe vertical ou une porte coulissante. On connaît néanmoins des dispositifs d'accès comprenant une porte dite « en élytre », c'est-à-dire mobile en rotation autour d'un axe transversal du véhicule. En position fermée, les portes en élytre referment une ouverture d'accès à l'habitacle. En position ouverte, elles adoptent une position pivotée d'environ un quart de tour vers le haut autour de l'axe transversal. Les portes en élytre présentent ainsi une cinématique originale et attrayante et offrent l'avantage de dégager une large ouverture pour entrer ou sortir de l'habitacle. Par exemple, les Lamborghini Countach^{®} comprennent de telles portes.

Toutefois, les portes en élytre sont complexes à fabriquer et sont particulièrement fragiles. En particulier, elles peuvent facilement être endommagées lorsqu'elles se trouvent en position ouverte.

### Présentation de l'invention

Le but de l'invention est de fournir un dispositif d'accès comprenant une porte en élytre remédiant aux inconvénients ci-dessus et améliorant les dispositifs d'accès connus de l'art antérieur.

Plus précisément, un premier objet de l'invention est un dispositif d'accès comprenant une porte en élytre qui soit particulièrement robuste et simple à fabriquer.

### Résumé de l'invention

L'invention se rapporte à un dispositif d'accès pour un véhicule automobile, comprenant une porte, un cadre de porte délimitant une ouverture d'accès, la porte étant mobile relativement au cadre de porte entre une position ouverte et une position fermée, la porte étant liée au cadre de porte par un moyen d'articulation en rotation autour d'un axe transversal, sensiblement perpendiculaire à l'ouverture d'accès, le dispositif d'accès comprenant en outre un moyen de butée distinct du moyen d'articulation, le moyen de butée comprenant une première surface de butée solidaire de la porte et une deuxième surface de butée solidaire du cadre de porte, la deuxième surface de butée étant destinée à coopérer avec la première surface de butée pour définir la position ouverte de la porte.

La deuxième surface de butée peut être agencée sur un deuxième élément de butée fixé à un montant de baie de parebrise et/ou à un brancard de porte du cadre de porte.

La première surface de butée peut être agencée sur un premier élément de butée fixé sur une face interne de la porte, le long d'un bord inférieur de la porte.

La première surface de butée peut être en métal. La deuxième surface de butée peut être en matériau plastique, notamment en polyamide.

Le moyen de butée peut être positionné à une distance supérieure ou égale à 10 cm, de préférence supérieure ou égale à 20 cm, notamment supérieure ou égale à 30 cm dudit axe transversal.

Le moyen de butée peut comprendre une première surface de retenue solidaire de la porte et une deuxième surface de retenue solidaire du cadre de porte et destinée à coopérer avec la première surface de retenue pour supporter un effort parallèle à l'axe transversal appliqué sur la porte en position ouverte.

La porte peut comprendre une poignée, la poignée comprenant une surface de préhension distincte de la première surface de butée et permettant d'ouvrir la porte depuis l'intérieur du véhicule, la poignée étant fixée à un élément de butée sur lequel est formé la première surface de butée ou la poignée et un élément de butée sur lequel est formé la première surface de butée formant un ensemble monobloc.

Le dispositif d'accès peut comprendre en outre un moyen d'assistance distinct du moyen de butée, le moyen d'assistance étant configuré pour assister un mouvement d'ouverture et/ou de fermeture de la porte.

L'invention se rapporte également à un véhicule automobile, comprenant un dispositif d'accès tel que défini précédemment.

Le véhicule peut comprendre un siège avant pour un passager avant et un siège arrière pour un passager arrière, l'ouverture d'accès du dispositif d'accès étant configurée pour accéder au siège avant et au siège arrière.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue de côté d'un véhicule automobile équipé d'un dispositif d'accès selon un mode de réalisation de l'invention, une porte du dispositif d'accès étant en position fermée.
La figure 2 est une vue de côté du véhicule de la figure 1, la porte étant dans une position intermédiaire entre une position fermée et une position ouverte.
La figure 3 est une vue de côté du véhicule de la figure 1, la porte étant en position ouverte.
La figure 4 est une vue schématique d'un moyen d'articulation du dispositif d'accès.
La figure 5 est une vue en perspective du dispositif d'accès.
La figure 6 est une vue en perspective d'un deuxième élément de butée du dispositif d'accès.
La figure 7 est une vue en perspective d'un premier élément de butée du dispositif d'accès.

### Description détaillée

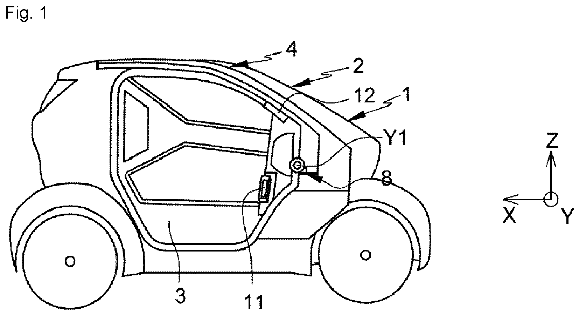

La figure 1 illustre schématiquement un véhicule 1 automobile comprenant un dispositif d'accès 2 selon un mode de réalisation de l'invention. Le véhicule 1 comprend un habitacle pourvu d'au moins un siège. Cet habitacle est accessible depuis l'extérieur du véhicule au moyen du dispositif d'accès 2. Selon le mode de réalisation présenté, le véhicule 1 comprend un unique siège avant et un unique siège arrière (non représentés). Il s'agit donc d'un véhicule relativement léger et compact, principalement destiné à un usage urbain. En variante, le véhicule 1 pourrait avoir tout autre nombre de sièges. Le véhicule 1 peut comprendre un unique dispositif d'accès à l'habitacle ou deux dispositifs d'accès agencés sensiblement symétriquement de chaque côté du véhicule, voire même un plus grand nombre de dispositifs d'accès 2. Le dispositif d'accès 2 permet d'accéder à la fois à un siège avant et à un siège arrière. Le véhicule 1 peut être par exemple un véhicule particulier, un véhicule utilitaire, ou même un camion.

Dans ce document, on définit la direction longitudinale X comme la direction vers laquelle le véhicule 1 se dirige en ligne droite dans le sens de la marche arrière. La direction transversale Y est une direction perpendiculaire à la direction longitudinale X et orientée de droite à gauche, selon le point de vue du conducteur. La direction verticale Z, est une direction perpendiculaire à la direction longitudinale X, perpendiculaire à la direction transversale Y, et orientée de bas en haut. On suppose que le véhicule repose sur un sol horizontal.

Le dispositif d'accès 2 comprend une porte 3 et un cadre de porte 4 délimitant une ouverture d'accès 5. Le cadre de porte 4 comprend une structure rigide, notamment formée par des éléments de caisse du véhicule. En particulier, le cadre de porte 4 comprend une première portion formée par un montant de baie de parebrise 6. Le montant de baie de parebrise 6 est un élément de caisse encadrant latéralement un parebrise du véhicule. Il s'étend en oblique vers le haut et vers l'arrière du véhicule. Le cadre de porte 4 comprend une deuxième portion, dans le prolongement de la première portion, formé par un brancard de porte 7. Le brancard de porte 7 est un élément de caisse s'étendant parallèlement à la direction longitudinale et formant un bord du toit du véhicule 1. Le cadre de porte 4 peut ensuite comprendre une troisième portion, adjacente à la deuxième portion, s'étendant sensiblement verticalement à l'arrière de l'ouverture d'accès 5. Une quatrième portion du cadre de porte, adjacente à la troisième portion, forme une partie d'un plancher du véhicule. Une cinquième portion du cadre de porte, adjacente à la quatrième portion et à la première portion s'étend sensiblement verticalement au niveau d'un tablier du véhicule. Ainsi, le cadre de porte 4 peut être formé par cinq portions adjacentes, reliées les unes aux autres. D'une manière générale, le cadre de porte 4 forme une structure rigide et robuste, apte à empêcher ou à limiter les déformations de l'habitacle en cas d'accident. En particulier, le montant de baie de parebrise 6 et le brancard de porte 7 sont des éléments de caisse particulièrement rigides car ils permettent de protéger l'utilisateur du véhicule contre des intrusions en cas de choc frontal ou latéral.

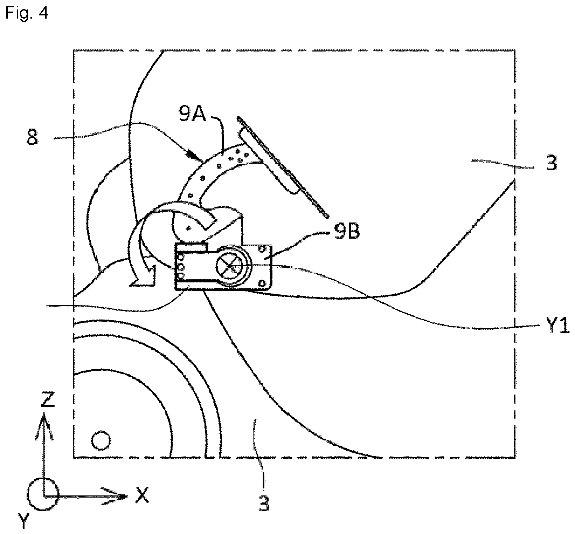

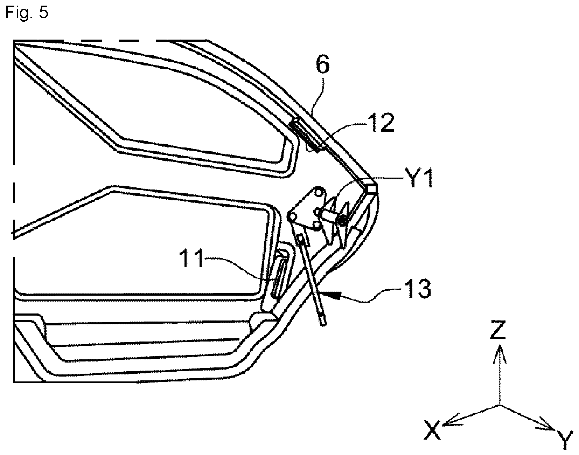

L'ouverture d'accès 5 s'étend dans un plan sensiblement parallèle à la direction longitudinale X et à la direction verticale Z. La porte 3 est mobile relativement au cadre de porte 4 entre une position ouverte et une position fermée. Plus particulièrement, la porte est une porte dite « en élytre ». Elle est liée au cadre de porte 4 par un moyen d'articulation 8 en rotation autour d'un axe transversal Y1. Un premier type dudit moyen d'articulation 8 est représenté à la figure 5, une variante de réalisation étant représentée à la figure 4. L'axe transversal Y1 est sensiblement parallèle à la direction transversale Y et donc perpendiculaire à l'ouverture d'accès 5. L'axe transversal Y1 peut être positionné à l'avant du cadre de porte 4, par exemple sensiblement au niveau d'une intersection entre la cinquième portion et la première portion décrite précédemment. L'axe transversal Y1 peut être parallèle à la direction transversal Y ou former un léger angle avec la direction transversale Y, de préférence un angle inférieur ou égal à 30°, voire inférieur ou égale à 20°, voire même inférieur ou égale à 10°. La composante d'inclinaison de l'axe Y1 est fonction du design et des contraintes d'architecture du véhicule. L'inclinaison de l'axe Y1 vise à dégager la ligne d'étanchéité durant le déplacement de la porte, notamment des points de contact entre la porte et la ligné d'étanchéité situés au-dessus de l'axe Y1.

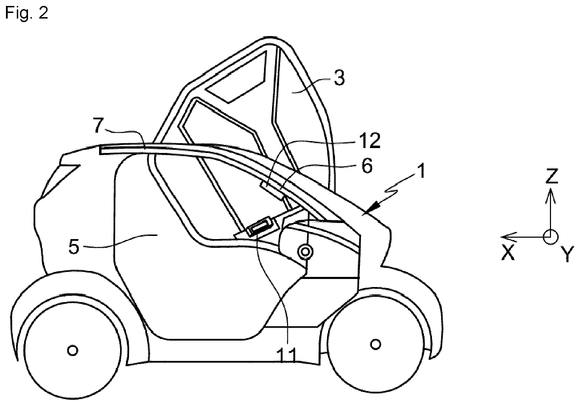

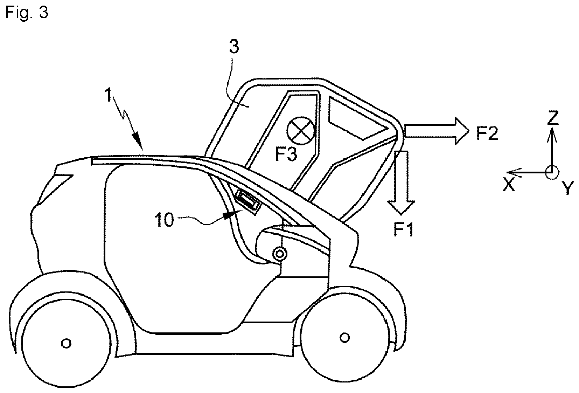

La figure 1 illustre le véhicule 1 avec la porte 3 en position fermée. La porte referme alors l'ouverture d'accès 5. La figure 2 illustre le véhicule 1 avec la porte 3 dans une position intermédiaire entre sa position fermée et sa position ouverte. La figure 3 illustre le véhicule 1 avec la porte 3 en position ouverte. La porte adopte alors une position pivotée vers l'avant, de manière à dégager complètement ou presque complètement l'ouverture d'accès 5. Entre sa position fermée et sa position ouverte, la porte 3 peut effectuer une rotation comprise entre 60° et 180 °, de préférence entre 90° et 150°. Comme cela est visible sur la figure 3, une petite partie de la porte 3 peut encore se trouver en vis-à-vis de l'ouverture d'accès 5, notamment au niveau d'un volant du véhicule, lorsque la porte est en position ouverte.

Le moyen d'articulation 8 est notamment illustré sur la figure 4. Il comprend un premier élément 9A fixé à la porte 3, et un deuxième élément 9B fixé au cadre de porte 4. Le premier élément 9A et le deuxième élément 9B sont assemblés selon une liaison pivot autour de l'axe transversal Y1. Ainsi, le moyen d'articulation 8 comprend un unique degré de liberté en rotation autour de l'axe transversal Y1. La cinématique de la porte 3 entre sa position ouverte et sa position fermée ne comprend pas de déplacement en translation et est donc particulièrement simple. Le moyen d'articulation n'est pas pourvu d'un moyen d'assistance électrique. Toutefois, sans sortir du cadre de l'invention, le moyen d'articulation pourrait être en relation avec un dispositif d'assistance électrique à la manoeuvre. Ainsi, la porte 3 est destinée à être manipulée manuellement entre sa position ouverte et sa position fermée. Le moyen d'articulation 8 est dépourvu d'une butée limitant l'amplitude de rotation de la porte 3 relativement au cadre de porte 4.

Le déplacement de la porte 3 de sa position fermée à sa position ouverte s'accompagne d'une modification de la hauteur de son centre de gravité. Pour aider un utilisateur du véhicule 1 à ouvrir ou à fermer la porte sans effort, le dispositif d'accès comprend de préférence un moyen d'assistance 13 tel qu'un vérin équipé d'un moyen élastique afin de limiter les efforts de manoeuvre. Comme visible sur la figure 5, le vérin peut comprendre une première extrémité fixée au à la porte et une deuxième extrémité fixé au cadre de porte. Le moyen d'assistance 13 peut exercer un effort sur la porte qui tend à la déplacer vers sa position ouverte, de manière à contrebalancer une élévation du centre de gravité de la porte.

Le dispositif d'accès 2 comprend en outre un moyen de butée 10 distinct du moyen d'articulation 8 et distinct du moyen d'assistance 13. Le moyen de butée 10 est formé par deux surfaces de butées conjuguées destinées à prendre appui l'une contre l'autre pour définir la position ouverte de la porte 3. Le moyen de butée 10 comprend ainsi une première surface de butée 11 solidaire de la porte 3 et une deuxième surface de butée 12 solidaire du cadre 4 de la caisse formant l'encadrement de porte.

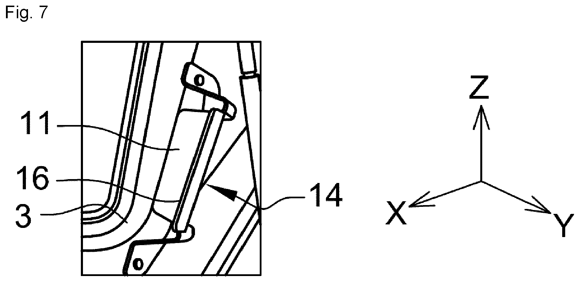

Plus précisément, la première surface de butée 11 est agencée sur un premier élément de butée 14 fixé sur une face interne de la porte, le long d'un bord inférieur de la porte. La face interne de la porte désigne la face de la porte tournée vers l'intérieur du véhicule, c'est-à-dire vers l'habitacle. Cette face est notamment visible sur les figures 1, 2 et 3. Le premier élément de butée 14 est représenté plus en détail sur la figure 7. Plus précisément, le premier élément de butée 14 peut être fixé sur un quart avant inférieur de la face interne de la porte. Une telle zone de la porte est particulièrement rigide et ne doit pas être spécifiquement renforcée pour accueillir une surface de butée. Le premier élément de butée 14 est de préférence fixé sur une partie rigide de la porte telle qu'une pièce structurelle et non sur une partie souple comme une pièce d'habillage.

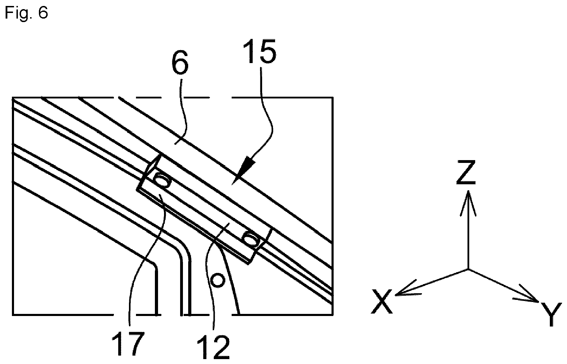

La deuxième surface de butée 12 est agencée sur un deuxième élément de butée 15 fixé au montant de baie de parebrise 6. Le deuxième élément de butée 15 est notamment visible sur la figure 6. Alternativement ou en complément, le deuxième élément de butée 15 pourrait aussi être fixé au brancard de porte 7. La deuxième surface de butée 12 est ainsi solidaire d'une partie particulièrement rigide et solide du véhicule. Il n'est pas nécessaire de renforcer l'élément de caisse sur lequel la deuxième surface de butée est agencée.

Le premier élément de butée 14 et le deuxième élément de butée 15 peuvent être vissés, rivetés, soudés ou fixés par tout autre moyen équivalent respectivement sur le cadre de porte et sur la porte.

Comme le moyen de butée 10 est distinct du moyen d'articulation 8, on bénéficie d'un maintien particulièrement robuste de la porte 3 en position ouverte. Par exemple, en référence à la figure 3, si un effort F1 est exercé de haut en bas sur la porte 3 en position ouverte au niveau de son extrémité la plus éloignée de l'axe transversal Y1, alors cet effort est principalement supporté par le moyen de butée 10 et non par le moyen d'articulation 8 ou par le moyen d'assistance 13. Les efforts supportés par le moyen d'articulation 8 ou par le moyen d'assistance 13 sont fortement réduits, ce qui permet de les préserver. Le moyen de butée 10 permet aussi de supporter un effort F2 longitudinal exercé sur la porte en position ouverte, et plus généralement tout effort exercé sur la porte dans un plan parallèle à la direction longitudinale X et à la direction verticale Z, et qui tendrait à ouvrir davantage la porte. De tels efforts pourraient être exercés par le vérin d'assistance, par un appui involontaire d'un utilisateur ou par vandalisme.

Selon un mode de réalisation la première surface de butée 11 est en métal, et la deuxième surface de butée 12 est en matériau plastique, notamment en polyamide. En particulier, le premier élément de butée 14 peut être formé par un élément métallique embouti, ou autrement dit une feuille métallique pliée. Selon une variante de réalisation, le premier élément de butée 14 peut être issu de moulage. Le deuxième élément de butée 15 peut être fabriqué par injection plastique. Alternativement, c'est la première surface de butée qui pourrait être en matériau plastique, et la deuxième surface de butée en métal. La combinaison d'une surface en métal et d'une surface en plastique permet d'obtenir un moyen de butée à la fois suffisamment rigide et non bruyant lors du contact entre les deux surfaces de butée. Le polyamide présente avantageusement une rigidité élevée. Alternativement les deux surfaces de butées 11, 12 pourraient être toutes deux en matériau plastique ou en métal. Toutefois, si les deux surfaces de butées sont en métal, le contact des deux surfaces métalliques l'une contre l'autre peut être bruyant et ces surfaces peuvent se rayer plus facilement, ce qui peut nuire à l'esthétique du véhicule.

De préférence, le moyen de butée 10 est positionné à une distance supérieure ou égale à 10 cm, voire supérieure ou égale à 20 cm, voire même supérieure ou égale à 30 cm de l'axe transversal Y1. La distance séparant le moyen de butée 10 de l'axe transversal Y1 peut être choisie aussi grande que possible tout en respectant les contraintes de positionnement des surfaces de butées 11 et 12, notamment des contraintes esthétiques et fonctionnelles. L'augmentation de la distance séparant le moyen de butée de l'axe transversal Y1 permet d'améliorer encore davantage la robustesse du maintien en position ouverte de la porte.

La distance séparant les deux surfaces de butées 11 et 12 l'une de l'autre, lorsque la porte est en position fermée, peut aussi être supérieure ou égale à plusieurs dizaines de centimètres.

Selon un autre aspect de l'invention, le moyen de butée comprend en outre une première surface de retenue 16 solidaire de la porte 3, et une deuxième surface de retenue 17 solidaire du cadre de porte 4. Lorsque la porte est en position ouverte, les deux surfaces de retenue 16 et 17 sont positionnées l'une contre l'autre ou à faible distance l'une de l'autre de manière à former une retenue de la porte selon la direction transversale Y. En référence à la figure 3, si un effort transversal F3 est exercé de gauche à droite ou de droite à gauche sur la porte 3 en position ouverte, alors cet effort est principalement supporté par l'appui de la première surface de retenue 16 contre la deuxième surface de retenue 17, et non par le moyen d'articulation 8 ou par le moyen d'assistance 13. Les efforts supportés par le moyen d'articulation 8 ou par le moyen d'assistance 13 sont fortement réduits, ce qui permet de préserver de manière pérenne leur état opérationnel en limitant leur usure. En moyenne, un jeu fonctionnel de quelques millimètres peut être prévu entre la première surface de retenue 16 et la deuxième surface de retenue 17 lorsque la porte est en position ouverte, de manière à garantir une absence d'interférence entre ces deux surfaces tout en tenant compte des tolérances de fabrication.

Selon encore un autre aspect de l'invention, la porte 3 peut comprendre une poignée (non représentée) comprenant une surface de préhension distincte de la première surface de butée 11. La surface de préhension permet à un utilisateur d'exercer un effort sur la porte pour l'ouvrir ou la refermer depuis l'intérieur du véhicule. Ainsi un utilisateur du véhicule ne cherchera pas à poser sa main sur la première surface de butée 11 pour ouvrir la porte et ne risque pas de se coincer la main entre les deux surfaces de butées 11 et 12. La poignée peut être par exemple fixée à l'élément de butée 14 sur lequel est formé la première surface de butée 11. Alternativement, la poignée et l'élément de butée 14 sur lequel est formé la première surface de butée 11 peuvent former un ensemble monobloc. La porte peut par exemple comprendre une main courante comprenant une surface de préhension formant la poignée et reliée à la porte par deux montants à chaque extrémité de la surface de préhension. Un de ces montants peut alors comprendre la première surface de butée.

Finalement, grâce à l'invention on dispose d'un véhicule 1 équipé d'une porte en élytre particulièrement robuste. En position ouverte, la porte est capable de supporter des efforts longitudinaux, verticaux ou transversaux sans risquer d'endommager son moyen d'articulation ou son moyen d'assistance. Les surfaces de butées 11, 12 sont agencées sur des parties déjà très rigides de la porte et du cadre de porte, et qui n'ont donc pas besoin d'être renforcées.

## Revendications

1. Dispositif d'accès (2) pour un véhicule (1) automobile, comprenant une porte (3), un cadre de porte (4) délimitant une ouverture d'accès (5), la porte étant mobile relativement au cadre de porte entre une position ouverte et une position fermée, la porte étant liée au cadre de porte par un moyen d'articulation (8) en rotation autour d'un axe transversal (Y1), sensiblement perpendiculaire à l'ouverture d'accès, **caractérisé en ce qu'**il comprend un moyen de butée (10) distinct du moyen d'articulation, le moyen de butée comprenant une première surface de butée (11) solidaire de la porte et une deuxième surface de butée (12) solidaire du cadre de porte, la deuxième surface de butée étant destinée à coopérer avec la première surface de butée pour définir la position ouverte de la porte.

2. Dispositif d'accès (2) selon la revendication précédente, **caractérisé en ce que** la deuxième surface de butée (12) est agencée sur un deuxième élément de butée (15) fixé à un montant de baie de parebrise (6) et/ou à un brancard de porte (7) du cadre de porte (4).

3. Dispositif d'accès (2) selon l'une des revendications précédentes, **caractérisé en ce que** la première surface de butée (11) est agencée sur un premier élément de butée (14) fixé sur une face interne de la porte (3), le long d'un bord inférieur de la porte.

4. Dispositif d'accès (2) selon l'une des revendications précédentes, **caractérisé en ce que** la première surface de butée (11) est en métal, et/ou **en ce que** la deuxième surface de butée (12) est en matériau plastique, notamment en polyamide.

5. Dispositif d'accès (2) selon l'une des revendications précédentes, **caractérisé en ce que** le moyen de butée (10) est positionné à une distance supérieure ou égale à 10 cm, de préférence supérieure ou égale à 20 cm, notamment supérieure ou égale à 30 cm dudit axe transversal (Y1).

6. Dispositif d'accès (2) selon l'une des revendications précédentes, **caractérisé en ce que** le moyen de butée (10) comprend une première surface de retenue (16) solidaire de la porte (3) et une deuxième surface de retenue (17) solidaire du cadre de porte et destinée à coopérer avec la première surface de retenue pour supporter un effort parallèle à l'axe transversal appliqué sur la porte en position ouverte.

7. Dispositif d'accès (2) selon l'une des revendications précédentes, caractérisé en que la porte (3) comprend une poignée, la poignée comprenant une surface de préhension distincte de la première surface de butée (11) et permettant d'ouvrir la porte depuis l'intérieur du véhicule, la poignée étant fixée à un élément de butée sur lequel est formé la première surface de butée ou la poignée et un élément de butée sur lequel est formé la première surface de butée formant un ensemble monobloc.

8. Dispositif d'accès (2) selon l'une des revendications précédentes, **caractérisé en ce qu'**il comprend en outre un moyen d'assistance (13) distinct du moyen de butée (10), le moyen d'assistance étant configuré pour assister un mouvement d'ouverture et/ou de fermeture de la porte.

9. Véhicule (1) automobile, **caractérisé en ce qu'**il comprend un dispositif d'accès (2) selon l'une des revendications précédentes.

10. Véhicule (1) selon la revendication précédente **caractérisé en ce qu'**il comprend un siège avant pour un passager avant et un siège arrière pour un passager arrière, l'ouverture d'accès (5) du dispositif d'accès (2) étant configurée pour accéder au siège avant et au siège arrière.
